# EUROPEAN PATENT SPECIFICATION

(11) **EP 2 190 937 B1**
(45) Date of publication and mention of the grant of the patent: **08.11.2017**
(21) Application number: 08802178.7
(22) Date of filing: 15.09.2008
(51) Int. Cl.: C09D 9/00, C09D 9/02

(54) **STRIPPING COMPOSITION**
ABLÖSEZUSAMMENSETZUNG
COMPOSITION D'EXTRACTION

(30) Priority: 20.09.2007 GB 0718356
(43) Date of publication of application: 02.06.2010
(73) Proprietor: Akzo Nobel Coatings International B.V., 6824 BM Arnhem (NL)
(72) Inventor: WORTHINGTON, Willow, Minke, Reading RG1 3JT (GB); VAN EEK, Gerrit, Benjamin, NL-4204 CM Gorinchem (NL); KOOLHAAS, Gerard, Jan, Antonie, Aart, NL-2415 BD Nieuwerbrug (NL); DE VEER, Michiel, Antonius, Josephus, NL-5243 WD Rosmalen (NL)
(74) Representative: Akzo Nobel IP Department
(86) International application number: PCT/EP2008/007632
(87) International publication number: WO 2009/036937

(56) References cited:
- EP-A- 0 867 482
- EP-A- 1 038 928
- WO-A-98/45377
- US-A1- 2002 013 241
- US-A1- 2004 266 636

## Description

The present invention relates to low solvent containing stripping compositions that remove dried coatings from substrates by forming a dry residue which can be easily removed by brushing. In particular, it relates to strippers that remove architectural coatings that dry at ambient temperature through solvent evaporation and/or autoxidation.

Dried coatings such as paints, varnishes and woodstains eventually need to be removed from the substrate to which they have been applied. Typical substrates include wood and metal. As most coatings are multilayer systems, the speed of penetration through the layers is an important characteristic of the stripping composition.

In WO98/45377 is disclosed a method and composition, for stripping coatings which contain hazardous elements. The method comprises first applying a treatment composition layer comprising certain silicates, phosphates or sulfates to the coating to be removed and then injecting an abrasive against the coating so that the treatment composition layer and the coating are removed and any hazardous material in the layer to be removed is contained. The treatment composition may comprise an organic solvent or may be water-based.

Known stripping compositions include thickened active solvent mixtures which act by attacking the dried coating film. Generally, the solvents swell the film causing it to bubble and lift away from the substrate rather than dissolve it. One of the disadvantages of such prior art stripping compositions is that the swollen film must be removed from the substrate, usually by scraping, before the solvents evaporate, otherwise the film readheres to the substrate and hardens making it difficult to remove. Because the film contains high levels of solvent, the resulting residue is gelatinous and sticky, and great care must be taken when removing it from the substrate. Otherwise, if dropped onto a carpet or similar covering, the residue will be very difficult to remove.

More recently, European Patent Application EP 0867482 discloses stripping compositions comprising film forming polymers, mineral particles and thickened solvent compositions. In these, the swollen film lifts from the substrate and tends to stick to the added particles. As the solvents evaporate, the film remains attached to the particles rather than reattaching itself to the substrate, forming a residue. Thus there is less urgency to remove the residue from the substrate before the solvents evaporate. Whilst this is an improvement over the prior art, the presence of film forming polymer, in addition to any polymeric thickener, tends to make the residue sticky and consequently difficult and unpleasant to remove. This is exacerbated by the high solvent content of such compositions which plasticize the polymer.

In addition to the plasticizing effect of the high solvent levels, such high levels, typically 50% by weight based on the total composition, are undesirable because they produce malodours, especially in confined, poorly ventilated spaces, such as small rooms. They are also considered bad for the environment and detrimental to the health of users.

European Patent Application EP1038928 discloses compositions containing dibasic esters and dipolar aprotic solvents. However, these compositions do not contain n-butyl acetate and require separate fragrance materials in order to mask the odour of the solvent mixture.

We have now discovered stripping formulations of low solvent content and which are substantially quicker to dry and easier to use than known compositions.

Accordingly there is provided a stripping composition for use in removing dried, architectural coatings from a substrate to which they are adhered, said coatings containing polymeric binder, the composition comprising, on a weight basis calculated on the total weight of the stripping composition,
i) from 8.5 to 40% of a solvent mixture capable of softening and lifting the binder from the substrate
ii) from 15 to 90% of a particulate inorganic material
iii) from 0.1 to 1.5% of a polymeric thickener material
wherein the composition is free of film forming polymer other than the thickener and the weight ratio of particulate inorganic material and polymeric thickener is from 40 to 500, wherein the solvent mixture includes methyl ethyl ketone up to 4% by weight of the total composition and wherein the composition further contains an evaporation inhibitor.

Preferably the solvent mixture contains n-butyl acetate. More preferably the stripping composition contains from 3 to 15% of n-butyl acetate by weight calculated on the total stripping composition, even more preferably, from 5 to 15 wt%, yet more preferably, from 10 to 15 wt% and most preferably from 10 to 12wt% should be used. Less than 3% does not provide sufficient cost benefit whilst more than 15% results in less efficient stripping.

The presence of n-butyl acetate in the solvent mixture serves a number of roles. It has a pleasant odour and thus masks the unpleasant odour of other solvents commonly used in paint stripper compositions. This makes it more pleasant for users, especially in spaces where ventilation is sub-optimal. It is therefore not necessary to add expensive specialised fragrance materials to the stripper composition. In addition, it is an effective solvent for dried paint, readily available and cost effective.

Methyl ethyl ketone (also known as MEK) is very useful in paint stripper compositions because it rapidly penetrates the dried paint film to be stripped and softens it. The benefit of this is that other less volatile and less aggressive solvents can more easily enter the paint film. Being less volatile these solvents are more persistent thereby completing the job of lifting the paint film.

MEK is included in the solvent mixture, although no more than 4% by weight calculated on the total stripping composition.

Any more than 4% MEK produces a stripping composition having a flashpoint of less than or equal to 21°C and being highly flammable. This is highly undesirable, especially when used in small rooms or other enclosed spaces.

Preferably, the amount of MEK can be varied from 0.5 to 4, more preferably from 0.75 to 3, even more preferably from 1.0 to 2.5, yet more preferably from 1.0 to 1.8 and most preferably from 1.0 to 1.5% wt %, calculated on the total stripper composition

We have found that the MEK is so volatile that once applied to a paint surface, unless steps are taken to prevent it, the MEK quickly escapes without softening the paint film. In order to prevent the rapid loss of MEK it is preferable to add a wax to the composition as an evaporation inhibitor.

Suitable waxes include the paraffin waxes, beeswax, carnauba wax, polythene wax, microcrystalline wax and polyester wax.

Paraffin waxes are preferred. Suitable paraffin waxes include Paraffin Wax 50/52. Preferably the paraffin wax is Paraffin Wax 50/52.

In order to incorporate the wax into the composition a suitable solvent for the wax must also be used. Suitable such solvents include the iso paraffins such as Isopar C, E, G, H, L, M, and V. Isopar G is the preferred solvent to dissolve Paraffin Wax 50/52.

It is thought that the wax forms a layer on the surface of the composition as it dries thereby, at least partially sealing in the solvents, in particular the MEK, thereby reducing the evaporation loss from the paint layers to be removed. It also helps to hold the dried composition together making it easier to remove when dry without it breaking into small crumbs.

Preferably, from 0.1 to 1.0wt% of the wax is used.

Surprisingly, in the absence of any film forming polymer and with such a low level of thickener material, the composition nevertheless adheres to vertical surfaces.

Preferably, the stripping composition comprises from 15 to 40%, more preferably from 15 to 28%, even more preferably from 20 to 28% and most preferably from 23 to 28% of the solvent mixture. Compositions containing lower amounts of solvent are preferred as they produce residue which is less sticky, especially when the coating composition being stripped is based on a non-crosslinked polymeric binder, for example, a paint based on emulsion polymer as the binder. Such low solvent compositions are also preferred for reasons of odour, health and environmental impact. Preferably the solvent mixture is free of methylene chloride.

Preferably, the stripping composition comprises from 25 to 90%, more preferably from 35 to 90%, still more preferably from 62 to 90% and most preferably from 62 to 85% of particulate inorganic material. Compositions containing such high amounts of the inorganic material are favoured as they tend to produce dry residue which is easy and convenient to remove.

Preferably, the weight ratio of inorganic material to solvent in the stripping composition is from 1.5 to 4.0, more preferably from 2.0 to 3.0 and most preferably from 2.3 to 2.9. This is advantageous, producing drier residue that is easier to remove than at the lower ratios. The volume fraction of the inorganic material in the composition is preferably from 37 to 60%, more preferably from 40 to 55%, most preferably from 45 to 52%. At volume fractions greater than 60%, the stripping composition forms a powdery crumb, making it difficult to adhere to vertical surfaces. A viscous paste is preferred.

The composition preferably comprises from 0.2 to 1.2% by weight of thickener, more preferably from 0.2 to 1.0, even more preferably from 0.25 to 0.80, yet more preferably from 0.25 to 0.60, still more preferably from 0.30 to 0.55 and most preferably from 0.30 to 0.45.

Preferably the thickener is a cellulose type, even more preferably it is a solution polymer dissolvable or swellable in the continuous phase of the composition. Most preferred are the cellulose ether thickeners.

The weight ratio of pigment to thickener is from 40 to 500, preferably from 75 to 300, even more preferably from 100 to 300 and most preferably from 100 to 200. Pigment to thickener ratio in the range 100 to 200 is most preferred because, surprisingly, it prevents phase separation of the stripper composition on storage. This is sometimes referred to as syneresis, Thus, the user does not need to stir the composition to reincorporate the components immediately prior to use.

The stripper composition may also contain evaporation inhibitors, such as Paraffin Wax 50/52.

In a variation of the invention, the composition further comprises up to 1.5% by weight of film forming polymer.

In a second aspect of the invention there is provided a method of removing a film of paint, varnish or woodstain from a substrate, which film contains a binder softenable by means of contact with the solvent of the stripping compositions according to any one of the preceding claims, and wherein the method involves
i) softening the film by applying onto the film a layer of a stripping composition according to the invention, causing a mixture of the solvent and softened residue of the film to absorb on the particulate mineral material in the layer of stripping composition
ii) the layer of stripping composition containing the softened film residue is retained on the substrate until the solvent has evaporated to leave a dry layer of particulate mineral material containing the film residue and
iii) the dry layer of particulate mineral material and film residue is physically removed from the substrate as a dry residue.

### Testing

### Stripping

Samples of the stripper compositions were tested to evaluate their effectiveness at removing multiple layers of paint from according to the following methods, one for old alkyd paint and one for emulsion paint. The alkyd paint is crosslinked through the mechanism of autoxidation. The emulsion paint is not crosslinked.

### Alkyd Paint

Hardboard panels 12 cm x 24 cm are primed with a single coat of solventbome alkyd primer (Histor Super Grondverf available from Sigma), applied by brush. This is allowed to dry for 1 day, and then overcoated with 14 coats of solventborne alkyd gloss paint (Histor Perfect Finish, available from Sigma), each in a different colour, allowing 1 day drying time between coats. The surface is denibbed lightly with 3M Scotch Brite between coats. The finished panel is aged indoors for at least 6 months before use.

### Emulsion Paint

Hardboard panels are prepared in a similar manner, using a water based primer (Dulux trade Super Grip Primer, available from Imperial Chemical Industries) followed by 5 coats of emulsion paint (PU Zijdeglanslak available from Wijzonol). The surface is denibbed lightly with 3M Scotch Brite between coats. Again the finished panel is aged indoors for at least 6 months before use.

To test a stripper sample, a 1mm thick layer is applied to an area of the test panel of approximately 2.2 x 12 cm. The stripper is inspected at regular intervals to determine the number of layers of paint it has penetrated, assessed by noting the colour of the remaining paint layer.

### Crusting

The panels prepared for testing stripping effectiveness above were also evaluated for crust formation, dryness of crust and ease of removal.

The following ingredients were used in the preparation of the examples.

Estasol is a mixture of dibasic esters dimethyl adipate, dimethyl glutarate and dimethyl succinate obtainable from IMCD Benelux BV.
Methocel 311 is a cellulose ether thickener available from Dow Chemical Company Lutensol® TO 5 is a surfactant available from BASF
Disperbyk® is a dispersing agent available from Byk
Paraffin wax 50/52 is a paraffin wax available from Wintershall HDK N20 is a fumed silica available from Wacker.

Ulmerweiss WL is CaCO3 obtainable from Elt Chemicals BV in the Netherlands. Speswhite is china clay available from Ingfer Fillers and Minerals in the Netherlands. Luvitec® K90 is polyvinyl pyrrolidone, a film forming polymer obtainable from BTC Benelux
n-butyl acetate, methyl ethyl ketone, Isopar G and 2-amino ethanol are available from Chemproha BV
Dimethyl sulfoxide (DMSO) is available from IMCD Benelux

### Isopar G is an iso paraffin available from Exxon

### Examples

The invention will now be illustrated by the following examples. All weights are as per Table 1.

### Example 1

### Method of manufacture

To an 800 litre vessel having a diameter of 1.08 metres and fitted with a stirrer arrangement having three vertical sidescrapers and a disperser of 0.35 metre diameter, charge the DMSO and Estasol/2-amino ethanol mixture. Add the powdered Methocell 311 whilst stirring in short bursts to incorporate the powder. Continue mixing until the Methocell 311 is fully swollen- this takes about 10 minutes. Continue stirring and add n-butyl acetate and Lutensol T0 5.

In a separate container dissolve Paraffin 50/52 in Isopar G and add the resulting solution to the vessel, followed by the MEK, while stirring. Finally, increase the disperser speed to approximately 500-1000 rpm, slowly add the Ulmerweiss WL and disperse until smooth. If carried out at room temperature the wax will take a few hours to dissolve-it is therefore more convenient to allow it to dissolve overnight. Alternatively, the solvent may be heated above the melting temperature of the wax in which case the wax dissolves in a matter of minutes.

### Comparative Example A

The same equipment is used as in Example 1.

Add Shellsol A to the vessel followed by the powdered Methocell 311, whilst stirring in short bursts to incorporate the powder. Continue mixing until the Methocell 311 is fully swollen- this takes about 10 minutes. Continue stirring and add the N-methyl pyrollidone (NMP) followed by HDK N20. Add the Lutensol T05 and the Disperbyk. Mix the Luvitec K90 and Speswhite and slowly add the resulting mixture to the vessel. Disperse at 1500 to 2000 rpm until smooth.

**Table 1**

| Ingredient | SG | Example 1 | | Comparative Example A | |
|---|---|---|---|---|---|
| | | kg | (wt%) | kg | (wt%) |
| 1.n-butyl acetate | 0.88 | 99.99 | (11.11) | | |
| 2. DMSO | 1.09 | 69.75 | (7.75) | | |
| 3. Estasol | 1.09 | 56.61 | (6.29) | | |
| 4. MEK | 0.80 | 12.78 | (1.42) | | |
| 5. Isopar G | 0.75 | 7.92 | (0.88) | | |
| 6. NMP | 1.03 | | | 112.50 | (15.00) |
| 7. Shellsol A | 0.88 | | | 308.25 | (41.10) |
| 8. 2-amino ethanol | 1.02 | 0.54 | (0.06) | | |
| 9. Methocell 311 | 1.20 | 4.05 | (0.45) | 3.60 | (0.48) |
| 10. Lutensol TO 5 | 0.96 | 3.42 | (0.38) | 13.50 | (1.80) |
| 11. Disperbyk | 1.08 | | | 0.90 | (0.12) |
| 12. Paraffin Wax 50/52 | 0.90 | 1.98 | (0.22) | | |
| 13. Ulmerweiss WL | 2.70 | 642.96 | (71.44) | | |
| 14. HDK N20 | 2.20 | | | 11.25 | (1.50) |
| 15. Speswhite | 2.60 | | | 285.00 | (38.00) |
| 16. Luvitec K90 | 1.10 | | | 15.00 | (2.00) |

### Flash point was measured as 32°C using the closed cup method

### Results

The two strippers were assessed for stripping effectiveness and crust formation on pre-prepared panels as described above.

### Penetration and removal of paint layers

### Alkyd paint

The stripper of Example 1 penetrated through the 15 layers of alkyd paint in two hours and a dry crust was formed that was easily removed by brushing. In contrast, Comparative Example A had penetrated only 5 layers in that time and it took a further 13 hours before all layers were penetrated.

### Emulsion paint

The stripper of Example 1 penetrated through the 6 layers in 20 minutes whilst the stripper of Comparative Example A took about 40 minutes. The stripper of Example 1 forms a hard, albeit, rubbery crust that is easy to remove, whilst Comparative Example A forms a slimy, gelatinous material which is difficult to remove with either a brush or a filling knife.

Thus, not only is the stripper of the invention faster, easier and more convenient to use, it also contains low solvent.

## Claims

1. A stripping composition for use in removing dried, architectural coatings from a substrate to which they are adhered, said coatings containing polymeric binder, the composition comprising, on a weight basis calculated on the total weight of the stripping composition,
i) from 8.5 to 40% of a solvent mixture, including up to 4% of MEK, capable of softening and lifting the binder from the substrate
ii) from 15 to 90% of a particulate inorganic material
iii) from 0.1 to 1.5% of a polymeric thickener material
wherein the composition is free of film forming polymer other than the thickener and the weight ratio of particulate inorganic material and polymeric thickener is from 40 to 500,
wherein the solvent mixture includes methyl ethyl ketone up to 4% by weight of the total composition and wherein the composition further contains an evaporation inhibitor.

2. A stripping composition according to claim 1 wherein the weight ratio of particulate inorganic material and polymeric thickener is from 75 to 300.

3. A stripping composition according to claim 1 wherein the weight ratio of particulate inorganic material and polymeric thickener is from 100 to 300.

4. A stripping composition according to claim 1 or claim 2 wherein the weight ratio of particulate inorganic material and polymeric thickener is from 100 to 200.

5. A stripping composition according to any one of the previous claims wherein the solvent mixture contains n-butyl acetate.

6. A stripping composition according to claim 5 wherein the n-butyl acetate comprises from 3 to 15% by weight of the total composition.

7. A stripping composition according to any one of the previous claims wherein the solvent mixture comprises from 15 to 40% by weight of the total composition.

8. A stripping composition according to any one of the previous claims wherein the solvent mixture comprises from 15 to 28% by weight of the total composition.

9. A stripping composition according to any one of the previous claims wherein the evaporation inhibitor is a wax.

10. A stripping composition according to any one of the previous claims wherein the solvent mixture is free of methylene chloride.

11. A stripping composition according to any one of the previous claims comprising from 62 to 90% by weight of the particulate inorganic material.

12. A stripping composition according to any one of the previous claims wherein the ratio of inorganic material to solvent mixture is from 1.5 to 4.0.

13. A stripping composition according to any one of the previous claims wherein the polymeric thickener material is a cellulose ether.

14. A stripping composition according to any one of the previous claims wherein the polymeric thickener material comprises from 0.30 to 0.45 % by weight of the composition.

15. A method of removing a film of dried, architectural coatings from a substrate to which they are adhered, which film contains a binder softenable by means of contact with the solvent mixture of the stripping compositions according to any one of the preceding claims, and wherein the method involves
i. softening the film by applying onto the film a layer of a stripping composition according to any one of the preceding claims, causing a blend of the solvent mixture and softened residue of the film to absorb on the particulate mineral material in the layer of stripping composition
ii. the layer of stripping composition containing the softened film residue is retained on the substrate until the solvent has evaporated to leave a dry layer of particulate mineral material containing the film residue and
iii. the dry layer of particulate mineral material and film residue is physically removed from the substrate as a dry residue.

## Patentansprüche

1. Ablösezusammensetzung zur Verwendung bei der Entfernung von getrockneten Baubeschichtungen von einem Substrat, an welchem diese anhaften, wobei die Beschichtungen polymeres Bindemittel enthalten, wobei die Zusammensetzung auf einer Gewichtsbasis, die aufgrund des Gesamtgewichtes der Ablösezusammensetzung berechnet ist, Folgendes umfasst:
i) zwischen 8,5 und 40% einer Lösungsmittelmischung, die das Bindemittel erweichen und von dem Substrat abheben kann,
ii) zwischen 15 und 90% eines partikelförmigen anorganischen Materials,
iii) zwischen 0,1 und 1,5 % eines polymeren Verdickermaterials,
wobei die Zusammensetzung frei von einem anderen filmbildenden Polymer als dem Verdicker ist und das Gewichtsverhältnis von partikelförmigem anorganischem Material und polymerem Verdicker zwischen 40 und 500 liegt,
wobei die Lösungsmittelmischung Methylethylketon bis zu 4 Gew-% der Gesamtzusammensetzung aufweist und wobei die Zusammensetzung weiterhin einen Verdampfungshemmer enthält.

2. Ablösezusammensetzung nach Anspruch 1, wobei das Gewichtsverhältnis von partikelförmigem anorganischem Material und polymerem Verdicker zwischen 75 und 300 liegt.

3. Ablösezusammensetzung nach Anspruch 1, wobei das Gewichtsverhältnis von partikelförmigem anorganischem Material und polymerem Verdicker zwischen 100 und 300 liegt.

4. Ablösezusammensetzung nach Anspruch 1 oder Anspruch 2, wobei das Gewichtsverhältnis von partikelförmigem anorganischem Material und polymerem Verdicker zwischen 100 und 200 liegt.

5. Ablösezusammensetzung nach einem der vorhergehenden Ansprüche, wobei die Lösungsmittelmischung n-Butylacetat enthält.

6. Ablösezusammensetzung nach Anspruch 5, wobei das n-Butylacetat von 3 bis 15 Gew-% der Gesamtzusammensetzung umfasst.

7. Ablösezusammensetzung nach einem der vorhergehenden Ansprüche, wobei die Lösungsmittelmischung von 15 bis 40 Gew-% der Gesamtzusammensetzung umfasst.

8. Ablösezusammensetzung nach einem der vorhergehenden Ansprüche, wobei die Lösungsmittelmischung von 15 bis 28 Gew-% der Gesamtzusammensetzung umfasst.

9. Ablösezusammensetzung nach einem der vorhergehenden Ansprüche, wobei der Verdampfungshemmer aus einem Wachs besteht.

10. Ablösezusammensetzung nach einem der vorhergehenden Ansprüche, wobei die Lösungsmittelmischung frei von Methylenchlorid ist.

11. Ablösezusammensetzung nach einem der vorhergehenden Ansprüche, welche von 62 bis 90 Gew-% des partikelförmigen anorganischen Materials umfasst.

12. Ablösezusammensetzung nach einem der vorhergehenden Ansprüche, wobei das Verhältnis von anorganischem Material zur Lösungsmittelmischung zwischen 1,5 und 4,0 beträgt.

13. Ablösezusammensetzung nach einem der vorhergehenden Ansprüche, wobei das polymere Verdickermaterial aus einem Celluloseether besteht.

14. Ablösezusammensetzung nach einem der vorhergehenden Ansprüche, wobei das polymere Verdickermaterial von 0,30 bis 0,45 Gew-% der Zusammensetzung umfasst.

15. Verfahren zur Entfernung eines Films von getrockneten Baubeschichtungen von einem Substrat, an dem diese anhaften, wobei der Film ein Bindemittel enthält, das über einen Kontakt mit der Lösungsmittelmischung der Ablösezusammensetzungen nach einem der vorhergehenden Ansprüche erweichbar ist, und wobei das Verfahren Folgendes beinhaltet:
i) Erweichen des Films durch Aufbringen einer Schicht einer Ablösezusammensetzung nach einem der vorhergehenden Ansprüche auf den Film, wodurch ein Gemisch aus der Lösungsmittelmischung und einem erweichten Rest des Films auf dem partikelförmigen Mineralstoff in der Schicht aus Ablösezusammensetzung aufgenommen wird,
ii) die Schicht aus Ablösezusammensetzung, die den erweichten Filmrest enthält, auf dem Substrat so lange zurückgehalten wird, bis das Lösungsmittel verdampft ist, so dass eine trockene Schicht aus partikelförmigem Mineralstoff zurückbleibt, die den Filmrest enthält, und
iii) die trockene Schicht aus partikelförmigem Mineralstoff und Filmrest physikalisch als trockener Rest von dem Substrat entfernt wird.

## Revendications

1. Composition de décapage pour une utilisation dans le retrait de revêtements architecturaux séchés d'un substrat auquel ils adhèrent, lesdits revêtements contenant un liant polymère, la composition comprenant, sur une base pondérale, et calculés par rapport au poids total de la composition de décapage,
i) 8,5 à 40% d'un mélange de solvants capable de ramollir et de soulever le liant du substrat
ii) 15 à 90% d'un matériau inorganique particulaire
iii) 0,1 à 1,5% d'un matériau épaississant polymère
où la composition est dépourvue de polymère filmogène autre que l'épaississant et le rapport en poids entre le matériau inorganique particulaire et l'épaississant polymère est de 40 à 500,
où le mélange de solvants comporte de la méthyléthylcétone jusqu'à 4% en poids de la composition totale et où la composition contient en outre un inhibiteur d'évaporation.

2. Composition de décapage selon la revendication 1, dans laquelle le rapport en poids entre le matériau inorganique particulaire et l'épaississant polymère est de 75 à 300.

3. Composition de décapage selon la revendication 1, dans laquelle le rapport en poids entre le matériau inorganique particulaire et l'épaississant polymère est de 100 à 300.

4. Composition de décapage selon la revendication 1 ou 2, dans laquelle le rapport en poids entre le matériau inorganique particulaire et l'épaississant polymère est de 100 à 200.

5. Composition de décapage selon l'une quelconque des revendications précédentes, dans laquelle le mélange de solvants contient de l'acétate de n-butyle.

6. Composition de décapage selon la revendication 5, dans laquelle l'acétate de n-butyle comprend 3 à 15% en poids de la composition totale.

7. Composition de décapage selon l'une quelconque des revendications précédentes, dans laquelle le mélange de solvants comprend 15 à 40% en poids de la composition totale.

8. Composition de décapage selon l'une quelconque des revendications précédentes, dans laquelle le mélange de solvants comprend 15 à 28% en poids de la composition totale.

9. Composition de décapage selon l'une quelconque des revendications précédentes, dans laquelle l'inhibiteur d'évaporation est une cire.

10. Composition de décapage selon l'une quelconque des revendications précédentes, dans laquelle le mélange de solvants est dépourvu de chlorure de méthylène.

11. Composition de décapage selon l'une quelconque des revendications précédentes, comprenant 62 à 90% en poids du matériau inorganique particulaire.

12. Composition de décapage selon l'une quelconque des revendications précédentes, dans laquelle le rapport du matériau inorganique sur le mélange de solvants est de 1,5 à 4,0.

13. Composition de décapage selon l'une quelconque des revendications précédentes, dans laquelle le matériau épaississant polymère est un éther de cellulose.

14. Composition de décapage selon l'une quelconque des revendications précédentes, dans laquelle le matériau épaississant polymère comprend 0,30 à 0,45% en poids de la composition.

15. Procédé de retrait d'un film de revêtements architecturaux séchés d'un substrat auquel ils adhèrent, lequel film contient un liant ramollissable par contact avec le mélange de solvants des compositions de décapage selon l'une quelconque des revendications précédentes, et où le procédé implique les étapes suivantes
i) le ramollissement du film en appliquant sur le film une couche d'une composition de décapage selon l'une quelconque des revendications précédentes, provoquant l'absorption d'une combinaison du mélange de solvants et d'un résidu ramolli du film sur le matériau minéral particulaire dans la couche de composition de décapage
ii) la couche de composition de décapage contenant le résidu de film ramolli est retenue sur le substrat jusqu'à l'évaporation du solvant pour laisser une couche sèche de matériau minéral particulaire contenant le résidu de film et
iii) la couche sèche de matériau minéral particulaire et de résidu de film est retirée physiquement du substrat en tant que résidu sec.
